Europäisches Patentamt

European Patent Office

Office européen des brevets

(11) Publication number: **0 225 656**
**A1**

## (12) EUROPEAN PATENT APPLICATION

(21) Application number: **86201934.6**

(22) Date of filing: **06.11.86**

(51) Int. Cl.⁴: **H01J 29/89** , H01J 43/24 , G02B 6/08

(30) Priority: **07.11.85 NL 8503053**

(43) Date of publication of application: **16.06.87 Bulletin 87/25**

(84) Designated Contracting States: **DE FR GB NL**

(71) Applicant: **N.V. Philips' Gloeilampenfabrieken Groenewoudseweg 1 NL-5621 BA Eindhoven(NL)**

(72) Inventor: **de Jong, Augustinus Cornelis Gerrit c/o INT. OCTROOIBUREAU B.V. Prof. Holstlaan 6 NL-5656 AA Eindhoven(NL)**
Inventor: **Schrederhof, Antonie c/o INT. OCTROOIBUREAU B.V. Prof. Holstlaan 6 NL-5656 AA Eindhoven(NL)**

(74) Representative: **Scheele, Edial François et al INTERNATIONAAL OCTROOIBUREAU B.V. Prof. Holstlaan 6 NL-5656 AA Eindhoven(NL)**

(54) Image-forming device including a fibre-optic plate.

(57) A fibre-optic plate for an image-forming device is formed from fibre bundles (2) stacked in a disturbed orthogonal configuration, so that image defects are avoided at the common corners otherwise formed. The fibre-optic plate notably includes rows (12) of fibre bundles (2) which are staggered with respect to one another and which are stacked, for example in an octagon, and may also include marked fibres.

FIG.1

EP 0 225 656 A1

## "Image-forming device including a fibre-optic plate"

The invention relates to a fibre-optic plate comprising a number of fibre bundles which are stacked in a fixed configuration and which have a rectangular cross-section, and also relates to an image-forming device comprising such a fibre-optic plate.

A fibre-optic plate of this kind is known from GB 1,470,889. A fibre-optic plate described therein comprises a number of fibre bundles which are stacked in a regular, orthogonal configuration and each of which comprises a large number of glass fibres as described therein. When a fibre-optic plate of this kind is used in an image-forming device, for example, as described in US 4,220,890, the occurrence of moiré effects in the images due to almost parallel mutual orientation of two line structures in the device can be avoided by choosing, utilizing marked fibres, a suitable mutual angular orientation. It has been found, however, that local image defects then occur during imaging.

It is the object of the invention to eliminate these defects; to this end, a fibre-optic plate of the kind set forth in accordance with the invention is characterized in that the fibre bundles are stacked in a disturbed orthogonal configuration.

It has been found that said local image defects no longer occur when such a fibre-optic plate is used in an image-forming device.

In a preferred embodiment in accordance with the invention, fibre bundles are stacked in rows which are staggered with respect to one another; more specifically, in comparison with a regular orthogonal system, successive rows now start alternately with a complete fibre bundle and half a fibre bundle.

Because the latter stacking of fibre bundles does not deviate from the stacking configuration according to the state of the art, apart from the disturbance of the regularity, use can again be made of marked fibres. Identification of the direction of the rows of fibre bundles will then be most important.

An image-forming device in accordance with the invention is characterized in that it includes a fibre-optic plate comprising fibre bundles stacked in a disturbed orthogonal configuration. Because no disturbing fibre deformation occurs near the common corners in such a fibre-optic plate, said image defects will not occur in the image-forming device. An image-forming device notably comprises two fibre-optic plates with an irregular orthogonal stacking of fibre bundles. Local moiré effects which could occur due to fibre bundle deformation near the common corners of the fibre bundles will again be avoided.

When at least one masked glass fibre having a fixed orientation with respect to the direction of the rows of fibre bundles is included in the fibre-optic plates, the occurrence of moiré effects due to the remaining regular line structure in the stack can be avoided.

In a preferred embodiment of an image-forming device in accordance with the invention, the fibre-optic plate forms an exit window of, for example an X-ray image intensifier tube or an entrance window of a television camera tube. The image-forming device includes notably an X-ray image intensifier tube including such an exit window as well as such a television camera tube which is optically coupled thereto. The advanage of the invention will be substantial notably when two or more optically coupled fibre-optic plates are used. Use can then be made again of marked fibre plates for the adjustment of an attractive angular orientation. It is to be noted that other orthogonal configurations also frequently occur in an image-forming device. To be mentioned in this respect are, for example a line pattern of television scanning, a gauze electrode frequently used in television camera tubes, etc..

A known method of manufacturing channel plates consists in that, using a fibre-optic plate, the core glass is removed by etching and electrodes are provided on the end faces of the plate. The invention can also be successfully used in a channel plate thus formed. Thus local image distorsions as well as the occurrence of image spots due to the fact that the intensification of the channels differs due to deformation can be avoided.

Some preferred embodiments in accordance with the invention will be described in detail hereinafter with reference to the drawing. Therein:

Figure 1 is a sectional view of a fibre-optic plate in accordance with the invention, and

Figure 2 shows diagrammatically an image-forming device in accordance with the invention.

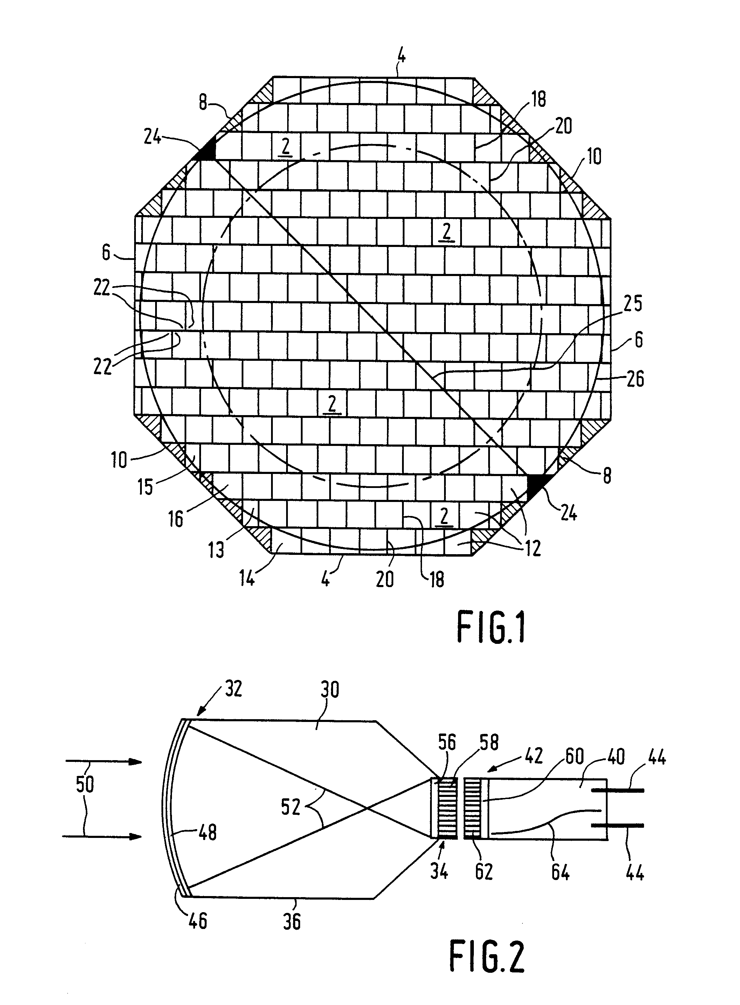

A fibre-optic plate as shown in Figure 1 includes a comparatively large number of fibre bundles 2 which have in principle a square cross-section in the present embodiment, but which may also have another rectangular cross-section. The fibre bundles are stacked in an orthogonal configuration with sides 4 and 6 which coincide with the principal directions of an orthogonal configuration and sides 8 and 10 which enclose an angle of 45° with respect thereto.

The fibre bundles 2 are stacked in rows 12 which extend parallel to the end faces 4 of the octagon. The successive rows alternately start with complete fibre bundles 14 and 16 and divided fibre bundles 13 and 15. However, for the invention it is irrelevant whether use is made of half a fibre bundle or another part of a fibre bundle for as long as it is ensured that the transitions 18 and 20 are not situated one in the prolongation of the other and that the corners 22 of the fibre bundles do not meet in one point. It has been found that said defects occur notably at such common corner points. This is due to the deformation of the fibre bundles at those areas when the last stack of fibre bundles is sintered together. The fibre-optic plate shown includes marked fibres 24. A line 25 which interconnects two of these fibres encloses an angle of 45° with respect to the rows of fibre bundles. Therefore, the edges 10 and 12 of the octagon preferably extend across an odd number of fibre bundles, in this case five bundles. A circle 26 incidates how a circular fibre plate can be formed from the orthogonal fibre-optic plate. The described orthogonal shape offers some advantages, such as the 45° line, but the stacking configuration is not relevant for the invention. For example, stacking in a square, a dodecagon or a 16-gon etc. is also possible.

Figure 2 shows an X-ray image intensifier tube/television chain which includes an X-ray image intensifier tube 30, having an entrance screen 32, an exit screen 34 and an envelope 36, and a television camera tube 40, having an entrance screen 42 and signal electrodes 44. The entrance screen 32 of the X-ray image intensifier tube includes an entrance window 46 and a luminescent photocathode layer 48. The luminescent photocathode layer may alternatively be provided on a carrier which is to be separately mounted in the envelope. A beam of image-carrying X-rays 50 generates light in the luminescent layer, said light being intercepted by the photocathode wherefrom photoelectrons are released. A likewise image-carrying beam of photoelectrons 52 is imaged on the exit screen 34 which includes a luminescent layer 56 and an exit window 58. The exit window 58 is formed by a fibre-optic plate which is composed of fibre bundles stacked in a disturbed orthogonal configuration in order to avoid image defects. The entrance screen 42 of the television camera tube 40 includes a photosensitive layer 60 which is provided directly on an entrance window 62 and which can be scanned by means of an electron beam 64. The entrance window 62 is again formed by fibre-optic plate which is optically coupled to the exit window of the X-ray image intensifier tube. Optical image defects can thus be avoided in the optical coupling between the X-ray image intensifier tube and the television camera tube. Local image defects can also be avoided when the fibre-optic plate 62 is also composed of fibre bundles stacked in a disturbed orthogonal configuration. Notably when use is made of two fibre-optic plates as indicated, these plates preferably include marked fibres in order to achieve optimum angular orientaion. In order to avoid the occurrence of phase errors in the image transfer, notably in the case of direct coupling of two fibre-optic plates in accordance with the invention, the fibre-optic plates can be provided with a phase-disturbing surface structure in accordance with US 4,247,165.

## Claims

1. A fibre-optic plate comprising a number of fibre bundles which are stacked in a fixed structure and which have a rectangular cross-section, characterized in that the fibre bundles (2) are stacked in a disturbed orthogonal configuration.

2. A fibre-optic plate as claimed in Claim 1, characterized in that the fibre bundles (2) are stacked in rows (12) which are staggered with respect to one another.

3. A fibre-optic plate as claimed in Claim 2, characterized in that a first fibre bundle of the rows is formed alternately by a complete fibre bundle (14, 16) and half a fibre bundle (13, 15).

4. A fibre-optic plate as claimed in any one of the preceding Claims, characterized in that the last stack of fibre bundles forms a substantially regular octagon.

5. A fibre-optic plate as claimed in Claim 1, 2, 3 or 4, characterized in that edges (8, 10) of a regular polygon in which the glass fibres are stacked enclose an angle of 45 with respect to the direction of the rows of fibre bundles (12) and cover an odd number of fibre bundles, at least a central position at an edge thereof being occupied by a marked fibre (24).

6. An image-forming device, characterized in that it includes at least one fibre-optic plate as claimed in any one of the preceding Claims.

7. An image-forming device as claimed in Claim 6, characterized in that it includes an X-ray image intensifier tube (30) provided with an exit window (58) in the form of a fibre-optic plate including fibre bundles which are stacked in a disturbed orthogonal configuration.

8. An image-forming device as claimed in Claim 6, characterized in that it includes a television camera tube (40) provided with an entrance window (62) in the form of a fibre-optic plate including fibre bundles which are stacked in a disturbed orthogonal configuration.

9. An image-forming device as claimed in any one of the Claims 6, 7 or 8, characterized in that it includes an X-ray image intensifier tube having an exit window in the form of a fibre-optic plate and a television camera tube having an entrance window in the form of a fibre-optic plate, the two fibre-optic plates having a disturbed orthogonal stacking of fibre bundles including a marked glass fibre.

10. A channel plate, characterized in that it is formed by a fibre-optic plate as claimed in any one of the Claims 1 to 5, where the core glass of the elementary glass fibres has been removed and electrodes have been provided on end faces of the plate.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 034 513 (AMERICAN OPTICAL CORP.) * Page 1, lines 36-51,104-114; figure 3 * | 1,2 | H 01 J 29/89 H 01 J 43/24 G 02 B 6/08 |
| D,A | FR-A-2 236 194 (PHILIPS) * Page 4, line 20 - page 5, line 28; figure 4 * | 4,5 | |
| A | DE-A-1 957 616 (WESTINGHOUSE ELECTRIC) * Page 3, line 22 - page 4, line 14; figure 1 * | 6-9 | |

TECHNICAL FIELDS SEARCHED (Int. Cl.4)

H 01 J 29/00
H 01 J 43/00
G 02 B 6/00

The present search report has been drawn up for all claims

| Place of search | Date of completion of the search | Examiner |
|---|---|---|
| THE HAGUE | 12-02-1987 | ANTHONY R.G. |